# EUROPÄISCHE PATENTANMELDUNG

(11) **EP 4 344 031 A1**
(43) Veröffentlichungstag der Anmeldung: **27.03.2024**
(21) Anmeldenummer: 22197699.6
(22) Anmeldetag: 26.09.2022
(51) Int. Cl.: H02K 5/04, F03D 80/60, H02K 7/18

(54) **GENERATOR FÜR EINE WINDENERGIEANLAGE ZUR ERZEUGUNG ELEKTRISCHER ENERGIE AUS KINETISCHER ENERGIE, WINDENERGIEANLAGE, UND VERWENDUNG MEHRERER VORTEXGENERATOREN ZUR ANORDNUNG AN EINEM AUSSENUMFANGSFLÄCHENABSCHNITT EINES GENERATORS FÜR EINE WINDENERGIEANLAGE**

(71) Anmelder: Wobben Properties GmbH, 26607 Aurich (DE)
(72) Erfinder: Daboul, Hussam, 26624 Südbrookmerland (DE); Giengiel, Wojciech, 26607 Aurich (DE); Arnold, Matthias, 26603 Aurich (DE)
(74) Vertreter: Eisenführ Speiser

(57) **Zusammenfassung**

Generator (1) für eine Windenergieanlage (100) zur Erzeugung elektrischer Energie aus kinetischer Energie, der Generator (1) umfassend einen Außenumfangsflächenabschnitt (2), der Außenumfangsflächenabschnitt (2) aufweisend: einen Anströmflächenabschnitt (10), den im Einbauzustand des Generators (1) Wind (W) in Anströmrichtung anströmt, wobei sich der Anströmflächenabschnitt (10) entlang einer Axialrichtung (A) und orthogonal dazu entlang einer Umfangsrichtung (U) erstreckt, und einen Kühlflächenabschnitt (20), der zur Kühlung des Generators (1) ausgebildet ist und im Einbauzustand in Anströmrichtung nachgelagert zu dem Anströmflächenabschnitt (10) angeordnet ist, wobei sich der Kühlflächenabschnitt (20) entlang einer Axialrichtung (A) und orthogonal dazu entlang einer Umfangsrichtung (U) erstreckt, dadurch gekennzeichnet, dass in einem Bereich des Außenumfangsflächenabschnitts (2), insbesondere in einem Bereich des Anströmflächenabschnitts (10) und/oder in einem Bereich des Kühlflächenabschnitts (20), ein oder mehrere Vortexgeneratoren (40) zur passiven Kühlung des Generators (1) angeordnet sind.(Fig. 2)

## Beschreibung

Die Erfindung betrifft einen Generator für eine Windenergieanlage zur Erzeugung elektrischer Energie aus kinetischer Energie, der Generator umfassend einen Außenumfangsflächenabschnitt, der Außenumfangsflächenabschnitt aufweisend einen Anströmflächenabschnitt, den im Einbauzustand des Generators Wind in Anströmrichtung anströmt, wobei sich der Anströmflächenabschnitt entlang einer Axialrichtung und orthogonal dazu entlang einer Umfangsrichtung erstreckt, und einen Kühlflächenabschnitt, der zur Kühlung des Generators ausgebildet ist und im Einbauzustand in Anströmrichtung nachgelagert zu dem Anströmflächenabschnitt angeordnet ist, wobei sich der Kühlflächenabschnitt entlang einer Axialrichtung und orthogonal dazu entlang einer Umfangsrichtung erstreckt.

Ferner betrifft die Erfindung eine Windenergieanlage. Weiterhin betrifft die Erfindung eine Verwendung mehrerer Vortexgeneratoren zur Anordnung an einem Außenumfangsflächenabschnitt eines Generators für eine Windenergieanlage.

Für einen effizienten Betrieb von Windenergieanlagen, insbesondere auch von Generatoren von Windenergieanlagen, über eine lange Lebensdauer ist die Kühlung der Generatoren von Windenergieanlagen unerlässlich. Es ist bekannt, Generatoren über deren Außenumfangsfläche zumindest abschnittsweise passiv zu kühlen. Für die passive Kühlung wird unter anderem Wind genutzt, der die Windenergieanlage umströmt. Aufgrund der begrenzten Außenumfangsfläche von Generatoren ist die Kühlungsleistung dieser Art der passiven Kühlung allerdings beschränkt. Es ist daher bekannt, Generatoren aktiv durch die Verwendung von Ventilatoren und dergleichen zu kühlen. Aktive Kühlungen haben allerdings den Nachteil, dass diese die Konstruktion des Generators verkomplizieren und gewartet werden müssen.

Es ist daher eine Aufgabe der vorliegenden Erfindung, einen Generator bereitzustellen, welcher die oben genannten Nachteile überwindet. Insbesondere ist es eine Aufgabe der vorliegenden Erfindung, einen Generator bereitzustellen, welcher eine verbesserte, insbesondere effizientere und robustere, sowie gleichzeitig wartungsarme und einfache Kühlung von Generatoren ermöglicht, die besonders kostengünstig ist.

Gemäß einem ersten Aspekt wird diese Aufgabe basierend auf einem eingangs beschriebenen Generator gelöst, wobei in einem Bereich des Außenumfangsflächenabschnitts, insbesondere in einem Bereich des Anströmflächenabschnitts und/oder in einem Bereich des Kühlflächenabschnitts, ein oder mehrere Vortexgeneratoren zur passiven Kühlung des Generators angeordnet sind. Vorzugsweise ist es vorgesehen, dass auf dem Anströmflächenabschnitt und/oder auf dem Kühlflächenabschnitt ein oder mehrere Vortexgeneratoren zur passiven Kühlung des Generators angeordnet sind.

Die Anordnung eines oder mehrerer Vortexgeneratoren im Bereich des Außenumfangsflächenabschnitts, insbesondere auf dem Außenumfangsflächenabschnitt eines Generators für eine Windenergieanlage steigert die Effizienz der passiven Kühlung durch den Wind erheblich. Durch das Anbringen von Vortexgeneratoren im Bereich des Außenumfangsflächenabschnitts, insbesondere auf dem Außenumfangsflächenabschnitt, besonders bevorzugt an dem Kühlflächenabschnitt und/oder vor dem Kühlflächenabschnitt und/oder an dem Anströmflächenabschnitt, wird die Turbulenz und damit der Wärmeübergangkoeffizient erheblich gesteigert. Dieser Effekt beruht im Wesentlichen darauf, dass die Vortexgeneratoren ein rotierendes Wirbelsystem bzw. stärkere Turbulenzen in ihrem Nachlauf erzeugen, die zu einer Durchmischung der thermischen Grenzschicht direkt bzw. in unmittelbare Nähe der zu kühlenden Oberfläche, zum Beispiel der Außenumfangsfläche des Generators, dort insbesondere des Kühlflächenabschnitts, führt.

Durch die verbesserte Wärmeübertragung im Bereich des Außenumfangsflächenabschnitts, insbesondere auf dem Außenumfangsflächenabschnitt, besonders bevorzugt an dem Kühlflächenabschnitt, kann der Generator bei gleicher Leistung kühler und somit effizienter Betrieben werden. Hierdurch entsteht ein direkter Anstieg des Energieertrags. Zusätzlich erlaubt der erfindungsgemäße Einsatz Vortexgeneratoren eine Reduktion der erforderlichen aktiven Kühlung, was zu einer Reduktion der Kosten und des Eigenverbrauchs führt.

Es ist zu verstehen, dass der Außenumfangsflächenabschnitt, und insbesondere der Anströmflächenabschnitt und/oder der Kühlflächenabschnitt, in bevorzugter Weise kein Teil oder kein Element der Gondel ist und/oder nicht durch die Gondel ausgebildet wird. Ferner ist es bevorzugt, dass der Außenumfangsflächenabschnitt, insbesondere der Anströmflächenabschnitt und/oder der Kühlflächenabschnitt, kein Teil oder kein Element des Spinners oder dergleichen ist oder durch den Spinner ausgebildet wird. Vorzugsweise ist der Generator im Einbauzustand bzw. im Betriebszustand nicht innerhalb der Gondel, insbesondere auch nicht teilweise innerhalb der Gondel, angeordnet.

Insbesondere ist vorgesehen, dass der Generator in Bezug zu einer Drehachse des Generators einen Außendurchmesser aufweist, der größer ist als ein Außendurchmesser der Gondel. Vorzugsweise ist vorgesehen, dass der Generator im Einbauzustand bzw. im Betriebszustand in Axialrichtung zwischen einem Spinner der Windenergieanlage und der Gondel der Windenergieanlage angeordnet ist. In bevorzugter Weise ist vorgesehen, dass der Generator im Einbauzustand bzw. im Betriebszustand stirnseitig benachbart zu der Gondel angeordnet ist.

Der Bereich des Außenumfangsflächenabschnitts, insbesondere der Bereich des Anströmflächenabschnitts und/oder des Kühlflächenabschnitts, ist vorzugsweise ein Raum in unmittelbarer Umgebung des Außenumfangsflächenabschnitts, insbesondere ein Raum in unmittelbarer Umgebung des Anströmflächenabschnitts und/oder ein Raum in unmittelbarer Umgebung des Kühlflächenabschnitts. Insbesondere kann der Bereich des Außenumfangsflächenabschnitts, insbesondere der Bereich des Anströmflächenabschnitts und/oder des Kühlflächenabschnitts, ein ringförmiger Bereich sein, welcher den Außenumfangsflächenabschnitt, insbesondere den Anströmflächenabschnitt und/oder den Kühlflächenabschnitt umschließt. Es ist in bevorzugter Weise vorgesehen, dass der Bereich des Außenumfangsflächenabschnitts, insbesondere der Bereich des Anströmflächenabschnitts und/oder des Kühlflächenabschnitts, innen durch den Außenumfangsflächenabschnitt, insbesondere den Anströmflächenabschnitt und/oder den Kühlflächenabschnitt, in Radialrichtung umfangsseitig begrenzt.

Der Außenumfangsflächenabschnitt, insbesondere der Anströmflächenabschnitt und/oder den Kühlflächenabschnitt, können eine ringförmige oder teilringförmige Umfangsfläche ausbilden. Vorzugsweise ist die ringförmige oder teilringförmige Umfangsfläche eben ausgebildet. Es kann bevorzugt sein, dass der Außenumfangsflächenabschnitt, insbesondere der Anströmflächenabschnitt und/oder den Kühlflächenabschnitt, profiliert ausgebildet ist. Insbesondere kann vorgesehen sein, dass der Außenumfangsflächenabschnitt, insbesondere der Anströmflächenabschnitt und/oder den Kühlflächenabschnitt, Erhebungen und/oder Ausnehmungen aufweist. Die Erhebungen erstrecken sich in Radialrichtung nach außen und die Ausnehmungen erstrecken sich in Radialrichtung nach innen. Insbesondere ist es bevorzugt, dass der Außenumfangsflächenabschnitt, insbesondere der Anströmflächenabschnitt und/oder den Kühlflächenabschnitt, ein Rippenprofil aufweist oder ein Rippenprofil ausbildet. Vorzugsweise umfasst das Rippenprofil mindestens zwei Rippen, wobei benachbart angeordnete Rippen beabstandet zueinander angeordnet sind, so dass zwischen den benachbart zueinander angeordneten Rippen ein Spalt ausgebildet wird, durch den der für Kühlung umgelenkte Wind hindurch geleitet wird. Der Spalt kann als Nut ausgebildet sein, dessen Nutgrund eine Durchströmung in Radialrichtung nach innen begrenzt. Ergänzend oder alternativ kann es bevorzugt sein, dass der Spalt als Durchgangskanal ausgebildet wird, welcher eine Durchströmung des Spalts in Radialrichtung nach innen freigibt.

Ein Vortexgenerator ist auch als Wirbelgenerator oder Turbulenzgenerator bekannt. Ein Vortexgenerator ist ein Strömungsleitelement, welches ausgebildet ist, eine Wirbelschleppe innerhalb oder an einer fluiddynamischen Grenzschicht zu erzeugen, die die Grenzschicht gegen turbulente Ablösungen stabilisiert und eine verstärkte Durchmischung der Fluidschichtungen erzeugt.

Ein Vortexgenerator kann unterschiedliche Formen aufweisen. Es sind beispielsweise rechteckförmige Vortexgeneratoren bekannt. Ferner kann ein Vortexgenerator dreieckförmig ausgebildet sein. Ebenso sind spitzbogenförmige bzw. ogive Vortexgeneratoren bekannt. Ergänzend oder alternativ kann es bevorzugt sein, dass die Vortexgeneratoren eine elliptische und/oder parabolische Form aufweisen. Ferner kann es bevorzugt sein, dass Vortexgeneratoren konvex und/oder konkav ausgebildet sind. Insbesondere können Vortexgeneratoren auch parabelförmig ausgebildet sein.

Vortexgeneratoren erstrecken sich in Längsrichtung üblicherweise zwischen einem ersten Ende und einem zweiten Ende bzw. zwischen einer ersten Kante und einer zweiten Kante mit einer Länge. Vorzugsweise werden Vortexgeneratoren im Einbauzustand oder Betriebszustand derart angeordnet, dass das erste Ende oder die erste Kante des Vortexgenerators von dem zur Passivkühlung des Generators genutzten Wind angeströmt wird und der Wind an dem zweiten Ende oder der zweiten Kante des Vortexgenerators abströmt. Das erste Ende bzw. die erste Kante nennt man dann auch Anströmende bzw. Anströmkante und entsprechend das zweite Ende bzw. die zweite Kante Abströmende bzw. Abströmkante. Ferner ist es bevorzugt, dass sich Vortexgeneratoren orthogonal zu der Längsrichtung, zum Beispiel im Einbauzustand bzw. Betriebszustand des Generators in Bezug zu der Drehachse des Generators in Radialrichtung, zwischen einer Basisseite des Vortexgenerators und einer Kopfseite des Vortexgenerators mit einer Höhe erstrecken. Weiterhin ist es bevorzugt, dass sich Vortexgeneratoren orthogonal zu der Längsrichtung, zum Beispiel im Einbauzustand bzw. Betriebszustand des Generators in Bezug zu der Drehachse des Generators in Umfangsrichtung, über eine Breite zwischen einer ersten und zweiten Seitenfläche des Vortexgenerators erstrecken.

Die Seitenflächen können zur Führung der anströmenden Luft von der Anströmkante bis zur Abströmkante ausgebildet sein. Es kann bevorzugt sein, dass die Seitenflächen keine Krümmung aufweisen. Ergänzend oder alternativ kann es bevorzugt sein, dass die Seitenflächen abschnittsweise gekrümmt ausgebildet sind. Vorzugsweise sind die Seitenflächen bauchig ausgebildet. Insbesondere ist es bevorzugt, dass die Seitenflächen zueinander geneigt angeordnet sind.

Mittels der Basisseite werden Vortexgeneratoren befestigt, zum Beispiel an der Außenumfangsfläche des Generators oder der Luftleiteinheit. Es ist bevorzugt, dass der eine oder die mehreren Vortexgeneratoren sich mit der Basisseite ausgehend von dem Außenumfangsflächenabschnitt, insbesondere von dem Anströmflächenabschnitt und/oder von dem Kühlflächenabschnitt, in Radialrichtung nach außen erstrecken. Es kann bevorzugt sein, dass der Außenumfangsflächenabschnitt, insbesondere der Anströmflächenabschnitt und/oder der Kühlflächenabschnitt, den einen oder die mehreren Vortexgeneratoren integral ausbilden. Ergänzend oder alternativ ist es bevorzugt, dass der eine oder die mehreren Vortexgeneratoren mittels der Basisseite mit dem Außenumfangsflächenabschnitt, insbesondere dem Anströmflächenabschnitt und/oder dem Kühlflächenabschnitt, stoffschlüssig und/oder formschlüssig und/oder kraftschlüssig verbunden sind bzw. für eine stoffschlüssige und/oder formschlüssige und/oder kraftschlüssige Verbindung mit dem Außenumfangsflächenabschnitt, insbesondere dem Anströmflächenabschnitt und/oder dem Kühlflächenabschnitt, ausgebildet sind. Vorzugsweise können die Vortexgeneratoren durch die Generatorbleche ausgebildet werden. Ergänzend oder alternativ sind die Vortexgeneratoren mit dem Kühlflächenabschnitt vorzugsweise schraubschlüssig und/oder nietend verbunden.

Es ist zu verstehen, dass es bevorzugt ist, dass die Breite und/oder die Länge der Vortexgeneratoren über die Höhe der Vortexgeneratoren variieren kann. Insbesondere kann es bevorzugt sein, dass die Breite und/oder die Länge der Vortexgeneratoren ausgehend von der Basisseite in Richtung der Kopfseite abnimmt.

Vortexgeneratoren umfassen vorzugsweise einen oder mehrere Flügel und/oder ein Basisteil, welches die Basisseite ausbildet. Insbesondere ist vorgesehen, dass der/die Flügel sich ausgehend von dem Basisteil bis zur Kopfseite erstrecken. Vorzugsweise umfasst ein Vortexgenerator zwei oder mehr gleichläufige und/oder zwei oder mehr gegenläufige Flügel. Vorzugsweise ist das Basisteil zur Verbindung mit dem Außenumfangsflächenabschnitt, insbesondere dem Anströmflächenabschnitt und/oder dem Kühlflächenabschnitt, ausgebildet. Der Flügel kann verdrillt ausgebildet sein.

Die Vortexgeneratoren können beispielsweise aus Kunststoff und/oder Metall bestehen. Insbesondere können die Vortexgeneratoren Kunststoff- und/oder Metallelemente umfassen.

Vorzugsweise erstrecken sich die Vortexgeneratoren ausgehend von dem Kühlflächenabschnitt. Insbesondere ist vorgesehen, dass sich die Vortexgeneratoren ausgehend von dem Kühlflächenabschnitt mit einer Haupterstreckung in einer Radialrichtung erstrecken. Es ist ergänzend oder alternativ bevorzugt, dass sich die Vortexgeneratoren ausgehend von dem Kühlflächenabschnitt mit einer Haupterstreckung in einer Umfangsrichtung erstrecken.

Die Größe der Vortexgeneratoren hängt von der Geometrie des Generators ab. Insbesondere hängt die Größe der Vortexgeneratoren davon ab, ob der Generator zur Kühlung eine Luftleiteinheit und/oder Kühlrippen aufweist. Vorzugsweise ist vorgesehen, dass die Größe der Vortexgeneratoren frei gewählt werden kann, wenn der Generator weder eine Luftleiteinheit noch Kühlrippen aufweist.

Der Abstand zwischen benachbart angeordneten Vortexgeneratoren entspricht vorzugsweise der einfachen Höhe oder mindestens der einfachen Höhe der benachbart angeordneten Vortexgeneratoren. Es kann auch bevorzugt sein, dass der Abstand zwischen benachbart angeordneten Vortexgeneratoren einer zweifachen, dreifachen, vierfachen oder mehrfachen Höhe der benachbart angeordneten Vortexgeneratoren entspricht. Es kann auch bevorzugt sein, dass der Abstand zwischen benachbart angeordneten Vortexgeneratoren mindestens einer zweifachen, dreifachen, vierfachen oder mehrfachen Höhe der benachbart angeordneten Vortexgeneratoren entspricht und/oder maximal einer zweifachen, dreifachen, vierfachen oder mehrfachen Höhe der benachbart angeordneten Vortexgeneratoren entspricht. In aller Regel ist ein Abstand zwischen benachbart angeordneten Vortexgeneratoren nicht größer als die zweifache Höhe der benachbart angeordneten Vortexgeneratoren, da dies dann zu einer Abschwächung des zusätzlichen Kühlungseffekts führt. Es kann auch bevorzugt sein, dass der Abstand zwischen benachbart angeordneten Vortexgeneratoren 25%, 50% oder 75% der Höhe der benachbart angeordneten Vortexgeneratoren entspricht. Ferner kann es bevorzugt sein, dass der Abstand zwischen benachbart angeordneten Vortexgeneratoren mindestens 0%, 25%, 50%, 75% oder 100% und/oder maximal 0%, 25%, 50% 75% oder 100% der Höhe der benachbart angeordneten Vortexgeneratoren entspricht.

Weist der Generator Vortexgeneratoren in Kombination mit Kühlrippen auf, ist der Abstand der benachbart angeordneten Vortexgeneratoren und die Höhe der Vortexgeneratoren vorzugsweise derart ausgebildet, dass die Anzahl der Flügel der Vortexgeneratoren eine ganzzahlige Teilung oder vielfaches der Anzahl der Kühlrippen ergibt. Dies hat den Effekt, dass jeweils eine ganzzahlige Anzahl von Wirbeln, die durch die Vortexgeneratoren erzeugt werden, in jeden Spalt zwischen zwei Kühlrippen gelenkt werden können. Dies ergibt sich inhärent, wenn die Vortexgeneratoren in einem Spalt zwischen zwei Kühlrippen angeordnet sind.

Es können Ausführungsformen des Generators bevorzugt sein, die eine mehrreihige Anordnung der Vortexgeneratoren vorsehen. Insbesondere sind bei einer mehrreihigen Anordnung der Vortexgeneratoren die Vortexgeneratoren in Axialrichtung und/oder Radialrichtung und/oder Umfangsrichtung hintereinander angeordnet. Bei einer mehrreihigen Anordnung der Vortexgeneratoren sind die hintereinander angeordneten Vortexgeneratoren vorzugsweise derart angeordnet, dass die Strömungsumlenkung durch die Vortexgeneratoren gleichrotierende Wirbel bewirken. Gleichrotierende Wirbel sind Wirbel, die in derselben Richtung wirbeln bzw. rotieren. Ferner kann es bevorzugt sein, dass bei einer mehrreihigen Anordnung der Vortexgeneratoren die Vortexgeneratoren der einzelnen Reihen in Umfangsrichtung und/oder in Axialrichtung und/oder in Radialrichtung versetzt zueinander angeordnet sind. Insbesondere ist es bevorzugt, dass bei einer mehrreihigen Anordnung der Vortexgeneratoren die Vortexgeneratoren der einzelnen Reihen mit einer unterschiedlichen Form und/oder einer unterschiedlichen Größe ausgebildet sein können.

Prinzipiell können Vortexgeneratoren derart ausgebildeter Generatoren in verschiedenen bevorzugten Abständen zueinander angeordnet sein. Insbesondere kann es bevorzugt sein, dass Vortexgeneratoren in Umfangsrichtung in verschiedenen bevorzugten Abständen zueinander angeordnet sind. Ergänzend oder alternativ kann es bevorzugt sein, dass Vortexgeneratoren in Axialrichtung bzw. Längsrichtung in verschiedenen bevorzugten Abständen zueinander angeordnet sind.

Es kann insbesondere bevorzugt sein, dass die Vortexgeneratoren überlappend angeordnet sind. Überlappend bedeutet hierbei, dass der Abstand der Vortexgeneratoren in Strömungsrichtung des Windes kleiner ist als die Länge der Vortexgeneratoren. Entsprechend sind bei einer überlappenden Anordnung Vortexgeneratoren mehrreihig, zumindest zweireihig angeordnet, so dass die in Strömungsrichtung nachgelagert angeordnete Reihe der Vortexgeneratoren beginnt bevor die in Strömungsrichtung vorgelagert angeordnete Reihe der Vortexgeneratoren endet. Überlappend bedeutet insbesondere, dass zwei oder mehrere Reihen Vortexgeneratoren in Axialrichtung bzw. Längsrichtung hintereinander angeordnet. Bei der überlappenden Anordnung der Vortexgeneratoren ist vorgesehen, dass das erste Ende bzw. die erste Kante der Vortexgeneratoren einer stromabwärtsangeordneten Reihe derart angeordnet sind, dass diese zwischen dem ersten Ende bzw. der ersten Kante und dem zweiten Ende bzw. der zweiten Kante der Vortexgeneratoren der stromaufwärtsangeordneten Reihe positioniert sind. Dies hat zur Folge, dass bei der überlappenden Anordnung der Vortexgeneratoren orthogonal zu Strömungsrichtung des Windes, zum Beispiel in Umfangsrichtung, abwechselnd Vortexgeneratoren der stromaufwärts angeordneten Reihe und der stromabwärts angeordneten Reihe angeordnet sind und die Vortexgeneratoren der stromaufwärts angeordneten Reihe und der stromabwärts angeordneten Reihe sich in Strömungsrichtung, beispielsweise in Axialrichtung bzw. Längsrichtung der Vortexgeneratoren, überlappen, d.h. bevor die Erstreckung der Vortexgeneratoren der stromaufwärts angeordneten Reihe endet, beginnt bereits die Erstreckung der Vortexgeneratoren der stromabwärts angeordneten Reihe.

Vorzugsweise sind bei dieser Ausführungsform benachbart angeordnete Vortexgeneratoren mit einem Abstand von mindestens der 2-fachen Höhe der Vortexgeneratoren und/oder maximal der 5-fachen Höhe der Vortexgeneratoren beabstandet zueinander angeordnet, insbesondere in Umfangsrichtung und/oder Axialrichtung beabstandet zueinander angeordnet. Es können aber auch größere Abstände zwischen benachbart angeordneten Vortexgeneratoren bevorzugt sein.

Es ist bevorzugt, dass der Kühlflächenabschnitt mehrere Kühlrippen mit einer Haupterstreckung in einer Axialrichtung aufweist, die in einer Umfangsrichtung orthogonal zu der Axialrichtung beabstandet angeordnet sind. Insbesondere bilden in Umfangsrichtung benachbart zueinander angeordnete Kühlrippen einen Spalt zur Kühlung des Generators. Vorzugsweise sind ein oder mehrere Vortexgeneratoren innerhalb des Spalts an zumindest einer der den Spalt definierenden Kühlrippen zur verbesserten Kühlung des Generators angeordnet. Ergänzend oder alternativ ist vorgesehen, dass die Vortexgeneratoren an einer Außenumfangsfläche mindestens einer der Kühlrippen angeordnet ist.

Der Kühlflächenabschnitt erstreckt sich in der Axialrichtung mit einer Kühleinheits-Länge zwischen einem ersten und zweiten Ende. Die Axialrichtung entspricht vorzugsweise einer Orientierung der Drehachse des Generators. In Umfangsrichtung, orthogonal zu der Axialrichtung, erstreckt sich der Kühlflächenabschnitt insbesondere mit einer Kühleinheits-Breite zwischen einer ersten und zweiten Seite. Orthogonal zu der Axialrichtung und Umfangsrichtung erstreckt sich der Kühlflächenabschnitt zwischen einer Kühleinheits-Innenfläche und der Kühleinheits-Außenfläche mit einer Kühleinheits-Höhe.

Im vorliegenden Text beziehen sich Positions- und Lageangaben, wie beispielsweise "oben" und "unten" oder "außen" und "innen" oder "radial", "axial", "längs" oder "umfang", sofern nicht anders ausgeführt auf den Betriebszustand bzw. Einbauzustand einer Windenergieanlage, insbesondere auf die Drehachse des Generators. Insbesondere ist zu verstehen, dass eine Axialrichtung bzw. Längsrichtung im Wesentlichen einer Ausrichtung bzw. Orientierung der Drehachse des Generators entspricht.

Beim Transport und/oder bei Wartungs- und/oder Instandhaltungsarbeiten an der Windenergieanlage und/oder dem Generator und/oder der Luftkühlvorrichtung und/oder Turm kann die Ausrichtung der Achsen, insbesondere zueinander, von der Ausrichtung der Achsen im Betriebszustand der Windenergieanlage abweichen.

Vorzugsweise ist die Kühleinheits-Höhe kleiner als die Kühleinheits-Breite. Ferner ist bevorzugt, dass die Kühleinheits-Breite kleiner ist als die Kühleinheits-Länge. Vorzugsweise ist die Kühleinheit als teilringförmiges Kühlsegment ausgebildet. Es kann auch bevorzugt sein, dass der Kühlflächenabschnitt ein oder mehrere teilringförmige Kühlsegmente umfasst.

Der Kühlflächenabschnitt ist vorzugsweise eben ausgebildet. Es kann auch bevorzugt sein, dass der Kühlflächenabschnitt profiliert ausgebildet ist. Insbesondere kann der Kühlflächenabschnitt Erhebungen oder Erstreckungen aufweisen, die sich in der Radialrichtung nach außen erstrecken, und/oder Ausnehmungen aufweisen, die sich in der Radialrichtung nach innen erstrecken. Insbesondere kann der Kühlflächenabschnitt ein rippenförmiges und/oder wellenförmiges und/oder rohrförmiges Profil und/oder kanalförmiges Profil aufweisen.

Im Betriebszustand kann der Kühlflächenabschnitt an einer Außenseite des Generators angeordnet sein. Es kann bevorzugt sein, dass der Kühlflächenabschnitt an einem Gehäuse des Generators ausgebildet ist oder das Gehäuse des Generators ist. Der Kühlflächenabschnitt ist vorzugsweise zumindest ein Abschnitt einer Außenumfangsfläche, insbesondere einer Außenumfangsfläche eines Generators. Zur Kühlung des Generators ist dieser vorzugsweise mit dem Kühlflächenabschnitt thermisch gekoppelt. In bevorzugter Weise bildet die Gondel den Kühlflächenabschnitt aus oder nimmt diese an der Außenseite auf. Insbesondere ist vorgesehen, dass die Gondel eine oder mehrere Öffnungen aufweist, in denen der Kühlflächenabschnitt angeordnet ist. Die eine oder mehreren Öffnungen können ringförmig oder teilringförmig ausgebildet sein.

Insbesondere kann eine Außenseite eines Stators und/oder eines Generators den Kühlflächenabschnitt ausbilden oder sein.

Zu den weiteren Vorteilen, Ausführungsvarianten und Ausführungsdetails dieses Aspekts der Erfindung und ihrer Fortbildungen wird auch auf die nachfolgende Beschreibung zu den entsprechenden Merkmalen der jeweiligen anderen Aspekte und deren Fortbildungen verwiesen.

Gemäß einer bevorzugten Ausführungsform des Generators ist vorgesehen, dass der Kühlflächenabschnitt gegenüber dem Anströmflächenabschnitt in einer Radialrichtung versetzt, insbesondere nach innen versetzt, angeordnet ist. Es ist zu verstehen, dass der Kühlflächenabschnitt in Bezug zu dem Anströmflächenabschnitt in der Radialrichtung vorzugsweise weiter innenliegt. Dies bedeutet insbesondere, dass der Übergang zwischen dem Anströmflächenabschnitt und dem Kühlflächenabschnitt stufenförmig ausgebildet ist. Eine derart ausgebildete Ausführungsform entsteht beispielsweise durch Generatorträgerstrukturen, die vor der zu kühlenden Oberfläche des Generators, dem Kühlflächenabschnitt, einen Anströmflächenabschnitt ausbilden.

Alternativ ist nach einer bevorzugten Ausführungsform des Generators vorgesehen, dass der Kühlflächenabschnitt und der Anströmflächenabschnitt in der Radialrichtung nicht versetzt zueinander angeordnet sind. Insbesondere ist bei dieser Ausführungsform vorgesehen, dass sich der der Kühlflächenabschnitt und der Anströmflächenabschnitt innerhalb derselben Ebene erstrecken. Es kann bevorzugt sein, dass Kühlflächenabschnitt und der Anströmflächenabschnitt bei dieser Ausführungsform eine Einheit ausbilden, bei der Kühlflächenabschnitt und der Anströmflächenabschnitt stufenlos ineinander übergehen.

Nach einer weiteren bevorzugten Fortbildung weist der Generator eine Luftleiteinheit auf, die im Bereich des Anströmflächenabschnitts und/oder im Bereich des Kühlflächenabschnitts angeordnet ist, wobei die Luftleiteinheit ausgebildet ist, den Wind in Richtung des Kühlflächenabschnitts, insbesondere in einer Radialrichtung nach Innen in Richtung des Kühlflächenabschnitts, umzulenken. Die Luftleiteinheit ist vorzugsweise derart ausgebildet, dass diese sich in Umfangsrichtung über den Umfang des Anströmflächenabschnitts und/oder des Kühlflächenabschnitts erstreckt. Insbesondere ist es in bevorzugter Weise vorgesehen, dass die Luftleiteinheit in dem Bereich des Außenumfangsflächenabschnitts, insbesondere in dem Bereich des Anströmflächenabschnitts und/oder in dem Bereich des Kühlflächenabschnitts, angeordnet ist. Ergänzend oder alternativ ist es bevorzugt, dass die Luftleiteinheit an dem Außenumfangsflächenabschnitt, insbesondere an dem Anströmflächenabschnitt und/oder an dem Kühlflächenabschnitt, angeordnet ist.

Die Luftleiteinheit weist vorzugsweine eine Anströmkante und eine Abströmkante auf, wobei die Luftleiteinheit im Einbauzustand derart angeordnet, ist, dass die Anströmkante gegenüber der Abströmkante in Bezug zu dem anströmenden Wind stromaufwärts angeordnet. Es ist zu verstehen, dass sich die Luftleiteinheit in Längsrichtung mit einer Länge zwischen der Anströmkante und der Abströmkante erstreckt. Ergänzend oder alternativ ist vorgesehen, dass sich die Luftleiteinheit in Radialrichtung mit einer Höhe zwischen der Anströmkante und der Abströmkante erstreckt. Ferner ist ergänzend oder alternativ bevorzugt, dass sich die Luftleiteinheit in Umfangsrichtung mit einer Breite erstreckt.

Diese bevorzugte Anordnung des einen oder der mehreren Vortexgeneratoren an der Luftleiteinheit steigert die Effizienz der passiven Kühlung durch den Wind erheblich. Durch das Anbringen von Vortexgeneratoren an der Luftleiteinheit, wird die Turbulenz und damit der Wärmeübergangkoeffizient erheblich gesteigert. Dieser Effekt beruht im Wesentlichen darauf, dass die Vortexgeneratoren ein rotierendes Wirbelsystem bzw. stärkere Turbulenzen in ihrem Nachlauf erzeugen, die zu einer Durchmischung der thermischen Grenzschicht direkt bzw. in unmittelbare Nähe der zu kühlenden Oberfläche, zum Beispiel der Außenumfangsfläche des Generators, dort insbesondere des Kühlflächenabschnitts, führt.

Durch die verbesserte Wärmeübertragung im Bereich des Außenumfangsflächenabschnitts, insbesondere auf dem Außenumfangsflächenabschnitt, besonders bevorzugt an dem Kühlflächenabschnitt, kann der Generator bei gleicher Leistung kühler und somit effizienter Betrieben werden. Hierdurch entsteht ein direkter Anstieg des Energieertrags. Zusätzlich erlaubt der erfindungsgemäße Einsatz Vortexgeneratoren eine Reduktion der erforderlichen aktiven Kühlung, was zu einer Reduktion der Kosten und des Eigenverbrauchs führt.

Die Luftleiteinheit ist vorzugsweise ausgebildet, in dem Betriebszustand der Windenergieanlage den Wind zur Luftkühlung in der Radialrichtung nach innen in Richtung des Kühlflächenabschnitts zu leiten. Hierzu ist die Luftleiteinheit vorzugsweise gegenüber dem Anströmflächenabschnitt und/oder dem Kühlflächenabschnitt geneigt angeordnet. Insbesondere ist die Luftleiteinheit derart angeordnet, dass diese einen oder mehrere Luftleitkanäle ausbilden, welche den Wind zur Luftkühlung in der Radialrichtung nach innen in Richtung des Kühlflächenabschnitts leiten. Insbesondere sind die einen oder mehrere Luftleitkanäle im Betriebszustand der Windenergieanlage zur Windrichtung ausgerichtet, so dass der Wind, welcher die Windenergieanlage umströmt, in den einen oder die mehreren Luftleitkanäle eintritt.

Es kann bevorzugt sein, dass die Luftleiteinheit, die sich ausgehend von dem Kühlflächenabschnitt in der Radialrichtung nach außen erstreckt, zu dem Anströmflächenabschnitt und/oder dem Kühlflächenabschnitt beabstandet angeordnet ist. Insbesondere kann die Luftleiteinheit zu dem Anströmflächenabschnitt und/oder dem Kühlflächenabschnitt in der Radialrichtung beabstandet angeordnet sein. Insbesondere weist die Luftleiteinheit in der Radialrichtung einen Abstand auf, welcher mindestens 0%, 1%, 5%, 10%, 20%, 30%, 40%, 50%, 100%, 150% oder 200% der Kühleinheits-Länge entspricht und/oder maximal 0%, 1%, 5%, 10%, 20%, 30%, 40%, 50%, 100%, 150% oder 200% der Kühleinheits-Länge entspricht. Der Abstand der Luftleiteinheit entspricht mindestens 0mm, 50mm, 100mm, 150mm, 200mm, 300mm oder mehr und/oder maximal 0mm, 50mm, 100mm, 150mm, 200mm oder 300mm. Der Abstand ist vorzugsweise der Abstand der Abströmkante der Luftleiteinheit zu der Außenfläche des Anströmflächenabschnitts und/oder des Kühlflächenabschnitts.

Alternativ kann es bevorzugt sein, dass der Anströmflächenabschnitt und/oder der Kühlflächenabschnitt die Luftleiteinheit integral ausbildet. Insbesondere ist auch bevorzugt, dass die Luftleiteinheit an dem Anströmflächenabschnitt und/oder dem Kühlflächenabschnitt befestigt ist. Vorzugsweise ist die Luftleiteinheit kraft- und/oder stoff- und/oder formschlüssig mit dem Anströmflächenabschnitt und/oder dem Kühlflächenabschnitt verbunden. Insbesondere kann bevorzugt sein, dass die Luftleiteinheit mit dem Anströmflächenabschnitt und/oder dem Kühlflächenabschnitt verschweißt ist. Alternativ oder ergänzend kann bevorzugt sein, die Luftleiteinheit mit dem Anströmflächenabschnitt und/oder dem Kühlflächenabschnitt zu verschrauben.

Ferner ist nach einer bevorzugten Fortbildung vorgesehen, dass der eine oder die mehreren Vortexgeneratoren an der Luftleiteinheit angeordnet sind. Vorzugsweise ist der eine oder sind die mehreren Vortexgeneratoren an einer in Radialrichtung außenliegenden Umfangsfläche der Luftleiteinheit angeordnet. Ergänzend oder alternativ kann es bevorzugt sein, dass der eine oder die mehreren Vortexgeneratoren an einer in Radialrichtung innenliegenden Umfangsfläche der Luftleiteinheit angeordnet ist bzw. sind. Insbesondere ist zu verstehen, dass die in innenliegende Umfangsfläche in Bezug zu der außenliegenden Umfangsfläche der Luftleiteinheit in Radialrichtung innenliegend ist.

Gemäß einer bevorzugten Ausführungsform der Luftleiteinheit ist vorgesehen, dass die Luftleiteinheit eine erste Luftleiteinheit aufweist, die sich ausgehend von der Kühleinheits-Außenfläche spitzwinklig in der Radialrichtung nach außen erstreckt und/oder mit der Kühleinheit einen konvergierenden ersten Luftleitkanal bildet, der ausgebildet ist, in dem Betriebszustand der Windenergieanlage den Wind zur Luftkühlung in der Radialrichtung nach innen in Richtung der Kühleinheit zu leiten. Alternativ oder ergänzend ist bevorzugt vorgesehen, dass die Kühleinheit mehrere Kühlrippen mit einer Haupterstreckung in einer Axialrichtung aufweist, die in einer Umfangsrichtung orthogonal zu der Axialrichtung beabstandet angeordnet sind, und die Luftleitvorrichtung eine Haupterstreckung im Wesentlichen in der Umfangsrichtung aufweist.

Vorzugsweise ist die Luftleiteinheit derart angeordnet, dass diese sich in einem spitzen Winkel bzw. spitzwinklig in der Radialrichtung nach außen erstreckt. Ein spitzer Winkel liegt zwischen mindesten einschließlich 0° und maximal einschließlich 90°. Insbesondere bewirkt die spitzwinklige Anordnung der Luftleiteinheit, dass der in dem Betriebszustand der Windenergieanlage im Wesentlichen axial anströmende Wind in der Radialrichtung nach innen in Richtung zu dem Kühlflächenabschnitt umgeleitet wird.

Die Luftleiteinheit ist vorzugsweise teilringförmig oder ringförmig ausgebildet. Die Luftleiteinheit erstreckt sich in der Axialrichtung mit einer Länge, in der Umfangsrichtung mit einer Breite und in der Radialrichtung mit einer Höhe. Vorzugsweise ist die Breite größer als die Länge und/oder die Höhe. Vorzugsweise weist die Luftleiteinheit ein lineares Profil auf. Ein lineares Profil weist insbesondere keine Wölbung auf. Es kann bevorzugt sein, dass die Luftleiteinheit ein geschwungenes Profil und/oder Profil mit Kanten aufweist. Vorzugsweise weist die Kante des Profils der Luftleiteinheit eine Kantenlänge auf, die vorzugsweise mindestens 0 % und maximal 200 % der Länge des Kühlflächenabschnitts entspricht, die sich zwischen einem ersten Ende und einem zweiten Ende erstreckt. Insbesondere kann das Profil der Luftleiteinheit auch S-förmig ausgebildet sein. Insbesondere kann das Profil der Luftleiteinheit konvexe und/oder konkave Profilabschnitte aufweisen. Die Höhe der Luftleiteinheit entspricht mindestens 0mm, 50mm, 100mm, 150mm, 200mm, 300mm oder mehr und/oder maximal 0mm, 50mm, 100mm, 150mm, 200mm oder 300mm. Insbesondere entspricht die Höhe der Luftleiteinheit in der Radialrichtung mindestens 0%, 1%, 5%, 10%, 20%, 30%, 40%, 50%, 100%, 150% oder 200% der Kühleinheits-Länge entspricht und/oder maximal 0%, 15 1%, 5%, 10%, 20%, 30%, 40%, 50%, 100%, 150% oder 200% der Kühleinheits-Länge. Die Höhe der Luftleiteinheit ist vorzugsweise der Abstand zwischen der Anströmkante und der Abströmkante der Luftleiteinheit.

Weist der Generator Vortexgeneratoren in Kombination mit einer Luftleiteinheit auf, ist die Höhe der Vortexgeneratoren insbesondere kleiner als der halbe Abstand zwischen der Luftleiteinheit und dem Generator.

Vorzugsweise ist die Höhe der Vortexgeneratoren kleiner als 1/3 des Abstands zwischen der Luftleiteinheit und dem Generator. Insbesondere ist die Höhe der Vortexgeneratoren kleiner als 1/3 des Abstands zwischen der Luftleiteinheit und dem Generator in der Radialrichtung. Ferner ist bevorzugt, dass die Höhe der Vortexgeneratoren kleiner als 1/3 des Abstands zwischen der Luftleiteinheit und dem Generator in der Axialrichtung ist.

Vortexgeneratoren mit einer größeren Höhe bewirken üblicherweise einen schwächeren Kühlungseffekt. Insbesondere bei Vortexgeneratoren mit einer größeren Höhe ist es daher bevorzugt, wenn die Flügel der Vortexgeneratoren verdrillt ausgebildet sind.

Ferner ist nach einer bevorzugten Fortbildung des Generators vorgesehen, dass der eine oder die mehreren Vortexgeneratoren in Anströmrichtung vor der Luftleiteinheit angeordnet sind.

Durch die Anordnung der Vortexgeneratoren vor, auf oder nach der Luftleiteinheit lässt sich beeinflussen, an welcher Stelle innerhalb der Grenzschicht der gekühlten Fläche des Kühlflächenabschnitts sich der von den Vortexgeneratoren erzeugte Wirbel befindet. Je weiter vorne die Vortexgeneratoren angeordnet sind, desto tiefer wird der Wirbel des jeweiligen Vortexgenerators durch die Luftleiteinheit in den Kühlflächenabschnitt, insbesondere die Kühlrippen der Oberfläche des Kühlflächenabschnitts, eingebracht. Dadurch kann die Wärmeabfuhr vom Generator und somit die Kühlung des Generators unterstützt werden. Dies ist insbesondere dann von Vorteil, wenn die Umströmung stark turbulent ist, beispielsweise durch nahe Strömungsablösungen, und sich somit eine gute Wärmeabfuhr ins Fernfeld des Kühlflächenabschnitts ergibt. Zusätzlich ergibt sich durch diese Positionierung eine Stärkung der Umströmung der Luftleiteinheit, da die Vortexgeneratoren deren aerodynamische Grenzschicht stärkt. Bei dieser bevorzugten Ausführungsform kann es allerdings nachteilig sein, dass sich eine stärkere Dämpfung der durch die Vortexgeneratoren erzeugten Wirbel durch die Umlenkung mit der Luftleiteinheit ergibt. Dämpfung bedeutet hierbei, dass die Wirbelstärke der von den Vortexgeneratoren erzeugten Wirbelstrukturen über die Entfernung schwächer wird, bzw. die Wirbel sich durchmischen. Dieser Effekt wird als Dämpfung der Wirbel bezeichnet und ist abhängig davon, ob sich die Wirbel frei ausbreiten können, oder durch äußere Druckgradienten oder Bauteile beeinflusst werden.

Gemäß einer weiteren bevorzugten Ausführungsform des Generators ist vorgesehen, dass der eine oder die mehreren Vortexgeneratoren in Anströmrichtung hinter der Luftleiteinheit angeordnet sind.

Wie zuvor bereits erläutert, lässt sich durch die Anordnung der Vortexgeneratoren vor, auf oder nach der Luftleiteinheit beeinflussen, an welcher Stelle innerhalb der Grenzschicht der gekühlten Fläche des Kühlflächenabschnitts sich der von den Vortexgeneratoren erzeugte Wirbel befindet. Je weiter hinten die Vortexgeneratoren angeordnet sind, umso höher wird die Ebene sein, in der die erzeugten Wirbel in der Grenzschicht verbleiben. Dies ist dann von Vorteil, wenn die Strömung schwach turbulent oder sogar permanent anliegend ist, da dann ein verbesserter Wärmeaustausch aus der Grenzschicht ins freie Feld ermöglicht wird. Bei dieser Ausführungsform gilt es allerdings zu beachten, dass die Luftleiteinheit zu Strömungsablösungen führen kann, so dass die hinter der Luftleiteinheit angeordneten Vortexgeneratoren nicht angeströmt werden und entsprechend keine Kühlung des Generators bewirken können.

Werden Vortexgeneratoren sowohl vor als auch hinter der Luftleiteinheit sowie ergänzend oder alternativ auf der Luftleiteinheit angeordnet, können durch diese Positionierung der Vortexgeneratoren die erzeugten Wirbel in bestimmte thermische Grenzschichten geleitet werden, zum Beispiel in einen Bereich schwacher Temperaturgradienten, um dort den Temperaturgradienten und somit die Kühlungswirkung zu erhöhen.

Weiterhin ist nach einer bevorzugten Fortbildung des Generators vorgesehen, dass die Luftleiteinheit im Bereich eines Übergangs von dem Anströmflächenabschnitt und dem Kühlflächenabschnitt angeordnet ist. Es ist zu verstehen, dass der Anströmflächenabschnitt vorzugsweise unmittelbar an den Kühlflächenabschnitt angrenzt. Insbesondere ist vorgesehen, dass der Anströmflächenabschnitt in den Kühlflächenabschnitt übergeht. Vorzugsweise geht der Anströmflächenabschnitt in den Kühlflächenabschnitt kontinuierlich oder gestuft über. Insbesondere ist die Luftleiteinheit in einem Endbereich des Anströmflächenabschnitts angeordnet, der an einen Endbereich des Kühlflächenabschnitts angrenzt, und/oder in einem Endbereich des Kühlflächenabschnitts angeordnet, der an einen Endbereich des Anströmflächenabschnitts angrenzt. Dies hat insbesondere den Vorteil, dass der die im Einbauzustand anströmende Wind den Kühlflächenabschnitt besser anströmt und somit die Kühlungsleistung erhöht wird.

Ferner ist gemäß einer bevorzugten Fortbildung des Generators vorgesehen, dass die Luftleiteinheit eine Haupterstreckungsrichtung in Umfangsrichtung aufweist, und/oder die Luftleiteinheit mindestens ein Leitelement aufweist, wobei vorzugsweise das mindestens eine Leitelement einen Umlenkabschnitt aufweist, der ausgebildet ist, den Wind in Richtung des Kühlflächenabschnitts zur Luftkühlung des Generators umzulenken, und/oder wobei vorzugsweise der Umlenkabschnitt durch ein gekrümmtes und/oder geknicktes Leitelement ausgebildet ist, und/oder mehrere Leitelemente in Radialrichtung und/oder in Axialrichtung versetzt zueinander angeordnet sind. Dies hat den Vorteil, dass die Kühlwirkung am Generator gezielt eingestellt werden kann.

Vorzugsweise ist vorgesehen, dass die Luftleiteinheit mehrere Luftleitelemente aufweist. Vorzugsweise sind die mehreren Luftleitelemente in Bezug zu der Anströmrichtung hintereinander angeordnet. Ergänzend oder alternativ ist vorgesehen, dass die mehreren Luftleitelemente in Umfangsrichtung verteilt angeordnet sind. Vorzugsweise sind die Luftleitelemente einreihig oder mehrreihig angeordnet.

Insbesondere ist es bevorzugt, dass die Luftleitelemente unterschiedliche Abmessungen aufweisen können.

Vorzugsweise ist die Lufteinheit oder sind das eine und/oder die mehreren Luftleitelemente an dem Generator, insbesondere an dem Anströmflächenabschnitt und/oder dem Kühlflächenabschnitt, befestigt. Es kann vorgesehen sein, dass die Lufteinheit oder die mehreren Luftleitelemente an dem Generator stoffschlüssig, insbesondere schweißend und/oder klebend, formschlüssig und/oder kraftschlüssig miteinander verbunden sind. Insbesondere ist die Lufteinheit oder sind das eine und/oder die mehreren Luftleitelemente an dem Generator, insbesondere an dem Anströmflächenabschnitt und/oder dem Kühlflächenabschnitt, angeschraubt.

Vorzugsweise ist vorgesehen, dass die Luftleiteinheit in Umfangsrichtung beabstandet zueinander angeordnete Befestigungselemente aufweist, welche ausgebildet, das eine oder die mehreren Luftleitelemente an dem Generator zu befestigen. Insbesondere können die Befestigungselemente dreieckförmige ausgebildet sein. Vorzugsweise ist vorgesehen, dass die Befestigungselemente eine Kante aufweisen, an der das eine oder die mehreren Luftleitelemente anliegen.

Gemäß einer weiteren bevorzugten Ausführungsform des Generators ist vorgesehen, dass die Vortexgeneratoren in Axialrichtung und/oder in Umfangsrichtung beabstandet zueinander angeordnet sind.

Nach einer ferner bevorzugten Fortbildung des Generators ist vorgesehen, dass die Vortexgeneratoren gleichmäßig verteilt auf dem Anströmflächenabschnitt und/oder dem Kühlflächenabschnitt angeordnet sind.

Die Vortexgeneratoren sind in Umfangsrichtung vorzugsweise beabstandet zueinander angeordnet, so dass diese einen Ring um den Generator bilden. Vorzugsweise sind die Vortexgeneratoren einreihig angeordnet. Es kann aber auch bevorzugt sein, dass die Vortexgeneratoren mehrreihig an dem Generator angeordnet sind. Insbesondere können die Vortexgeneratoren hierbei mehrere in Axialrichtung beabstandet zueinander angeordnete Ringe um den Generator bilden. Die Größe der Vortexgeneratoren und die Anzahl der Reihen der Vortexgeneratoren kann dabei über den Umfang variiert werden. Dies kann insbesondere dann zum Tragen kommen, wenn zum Beispiel eine thermische Unrundheit des Generators ausgeglichen werden soll. Hierzu sind die Vortexgeneratoren vorzugsweise auf der Außenumfangsfläche des Generators, insbesondere der Außenumfangsfläche des Anströmflächenabschnitts und/oder der Außenumfangsfläche des Kühlflächenabschnitts angeordnet. Ergänzend oder alternativ ist vorgesehen, dass die Vortexgeneratoren seitlich an den Innenwänden möglicher Kühlrippen angeordnet sind.

Gemäß einem weiteren Aspekt wird die oben genannte Aufgabe gelöst basierend auf einer eingangs beschriebenen Windenergieanlage aufweisend einen Generator gemäß dem zuvor beschriebenen Aspekt und/oder der zuvor beschriebenen bevorzugten Ausführungsformen davon.

Gemäß einem weiteren Aspekt wird die oben genannte Aufgabe gelöst durch eine Verwendung von mehreren Vortexgeneratoren zur Anordnung in einem Bereich eines Außenumfangsflächenabschnitts (2), insbesondere in einem Bereich eines Außenumfangsflächenabschnitts, insbesondere zur Anordnung in einem Bereich eines Anströmflächenabschnitts (10) und/oder in einem Bereich eines Kühlflächenabschnitts (20), besonders bevorzugt zur Anordnung an einem Anströmflächenabschnitt und/oder an einem Kühlflächenabschnitt und/oder einer Luftleiteinheit,, eines Generators für eine Windenergieanlage.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen des Generators bzw. der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische, dreidimensionale Ansicht einer beispielhaften Ausführungsform einer Windenergieanlage;
- Fig. 2: eine schematische, dreidimensionale Schnittansicht einer ersten bevorzugten Ausführungsform eines Generators;
- Fig. 3: eine schematische, dreidimensionale Schnittansicht einer weiteren bevorzugten Ausführungsform eines Generators basierend auf der in Figur 2 dargestellten Ausführungsform;
- Fig. 4: eine schematische, dreidimensionale Schnittansicht einer weiteren bevorzugten Ausführungsform eines Generators basierend auf der in Figur 2 dargestellten Ausführungsform;
- Fig. 5: eine schematische, dreidimensionale Schnittansicht und Detailansicht einer weiteren bevorzugten Ausführungsform eines Generators; und
- Fig. 6a,b: schematische, dreidimensionale Detailansichten von bevorzugten Anordnungen und Ausbildungen von Vortexgeneratoren an einem Generator.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

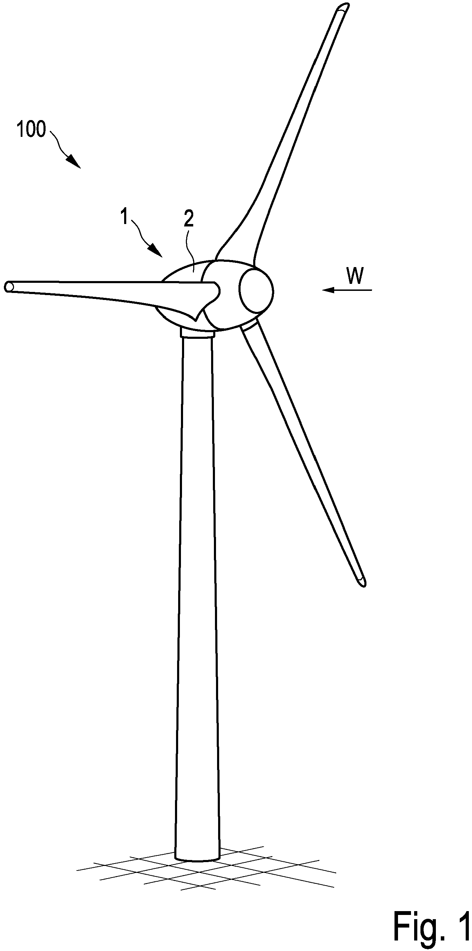

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass der Generator im Detail nicht erkennbar ist.

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind W in eine Drehbewegung versetzt und dreht somit auch einen elektrodynamischen Rotor oder Läufer eines Generators 1, welcher direkt oder indirekt mit dem aerodynamischen Rotor 106 gekoppelt ist. Der Generator 1 ist in der Gondel 104 angeordnet und erzeugt elektrische Energie.

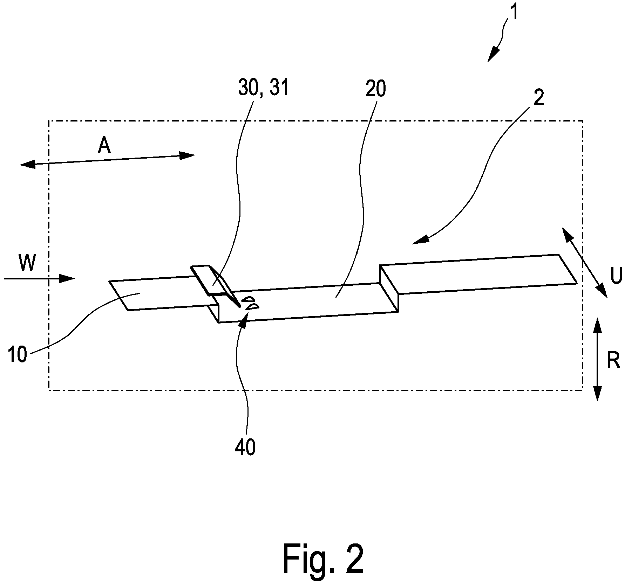

Die Figuren 2 bis 4 zeigen verschiedene bevorzugte Ausführungsformen eines Generators 1. Die in den Figuren 2 bis 4 dargestellten Generatoren 1 sind für den Einsatz in Windenergieanlagen 100 wie diese in Figur 1 schematisch dargestellt ist, geeignet. Diese Generatoren 1 sind dazu ausgebildet aus kinetischer Energie des Windes W elektrische Energie zu erzeugen.

Die in den Figuren 2 bis 4 dargestellten Generatoren 1 umfassen einen Außenumfangsflächenabschnitt 2, der einen Anströmflächenabschnitt 10 und einen Kühlflächenabschnitt 20 aufweist. Der Anströmflächenabschnitt 10 ist dabei jener Flächenabschnitt des Generators 1, den der Wind W im Einbauzustand des Generators in einer Anströmrichtung anströmt. Es ist vorgesehen, dass sich der Anströmflächenabschnitt 10 entlang einer Axialrichtung A und orthogonal zu der Axialrichtung A in einer Umfangsrichtung U erstreckt. Der Kühlflächenabschnitt 20 ist dem Anströmflächenabschnitt 10 im Einbauzustand in Anströmrichtung nachgelagert angeordnet. Der Kühlflächenabschnitt 20 erstreckt sich, wie auch der Anströmflächenabschnitt 10, entlang der Axialrichtung A und orthogonal zu der Axialrichtung A in der Umfangsrichtung U. Die in den Figuren 2 bis 4 dargestellten verschiedenen Ausführungsformen des Generators 1 zeichnen sich dadurch aus, dass auf dem Anströmflächenabschnitt 10 und/oder auf dem Kühlflächenabschnitt 20 ein oder mehrere Vortexgeneratoren 40 angeordnet sind.

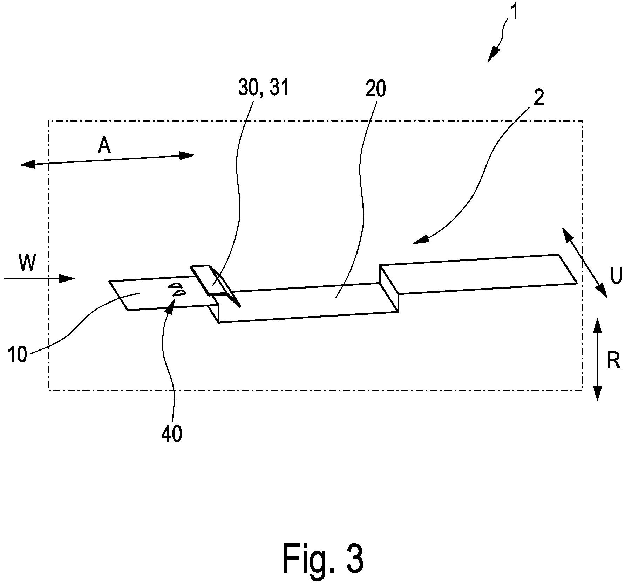

Bei den in den Figuren 2 und 3 dargestellten bevorzugten Ausführungsformen des Generators 1 ist vorgesehen, dass der Kühlflächenabschnitt 20 gegenüber dem Anströmflächenabschnitt 10 in einer Radialrichtung R nach innen versetzt angeordnet ist. Indem der Kühlflächenabschnitt 20 gegenüber dem Anströmflächenabschnitt 10 nach innen zurückversetzt ist, ist der Übergang von dem Anströmflächenabschnitt 10 zu dem Kühlflächenabschnitt 20 stufenförmig ausgebildet.

Ferner ist vorgesehen, dass die in den Figuren 2 und 3 dargestellten Generatoren 1 eine Luftleiteinheit 30 aufweisen. Die Luftleiteinheit 30 ist im Bereich des Übergangs von dem Anströmflächenabschnitt 10 zu dem Kühlflächenabschnitt 20 angeordnet. Hierbei ist die Luftleiteinheit 30 derart ausgebildet, dass die Luftleiteinheit 30 den Wind W in Richtung des nach innenversetzten Kühlflächenabschnitts 20 umlenkt. Die Luftleiteinheit 30 weist hierzu eine Haupterstreckungsrichtung in Umfangsrichtung U, so dass der Wind W zur Kühlung des Generators 1 gleichmäßig über dessen Außenumfangsflächenabschnitt 2 geleitet wird. Es ist in den beiden bevorzugten Ausführungsformen vorgesehen, dass die Luftleiteinheit 30 als Leitelement ausgebildet ist, einen Umlenkabschnitt aufweist, der ausgebildet ist, den Wind W in Richtung des Kühlflächenabschnitts 20 zur Luftkühlung des Generators 1 umzulenken. Der Umlenkabschnitt der als Leitelement ausgebildeten Luftleiteinheit 30 ist hierzu geknickt ausgebildet.

Die in den Figuren 2 und 3 dargestellten Ausführungsformen unterscheiden sich im Wesentlichen durch die Anordnung der Vortexgeneratoren 40. In der in Figur 2 dargestellten Ausführungsform des Generators 1 sind die Vortexgeneratoren 40 auf dem Kühlflächenabschnitt 20 in Anströmrichtung des Windes W hinter der Luftleiteinheit 30 angeordnet. Im Gegensatz dazu ist bei der in Figur 3 dargestellten Ausführungsform des Generators 1 vorgesehen, dass die Vortexgeneratoren 40 auf dem Anströmflächenabschnitt 10 in Anströmrichtung des Windes W vor der Luftleiteinheit 30 angeordnet sind.

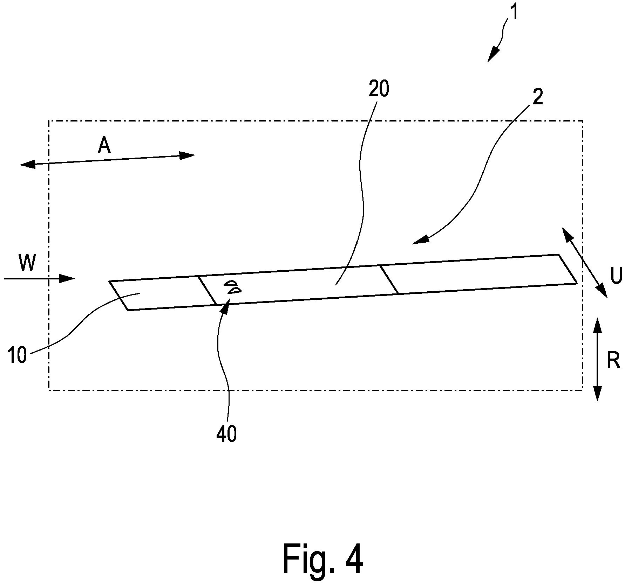

Figur 4 zeigt eine weitere bevorzugte Ausführungsform eines Generators 1 mit einem Außenumfangsflächenabschnitt 2. Bei dieser Ausführungsform ist vorgesehen, dass der Kühlflächenabschnitt 20 und der Anströmflächenabschnitt 10 in einer Radialrichtung R nicht versetzt zueinander angeordnet sind. Dies bedeutet, dass Kühlflächenabschnitt 20 und der Anströmflächenabschnitt 10 sich innerhalb derselben Ebene erstrecken. Ferner ist bei dieser Ausführungsform des Generators 1 keine Luftleiteinheit 30 vorgesehen, die zur Kühlung des Generators den Wind W auf den Kühlflächenabschnitt 20 umleitet. Die Kühlung des Generators 1 wird bei diesem Ausführungsbeispiel allein durch die auf dem Kühlflächenabschnitt 20 angeordneten Vortexgeneratoren 40 erzeugt.

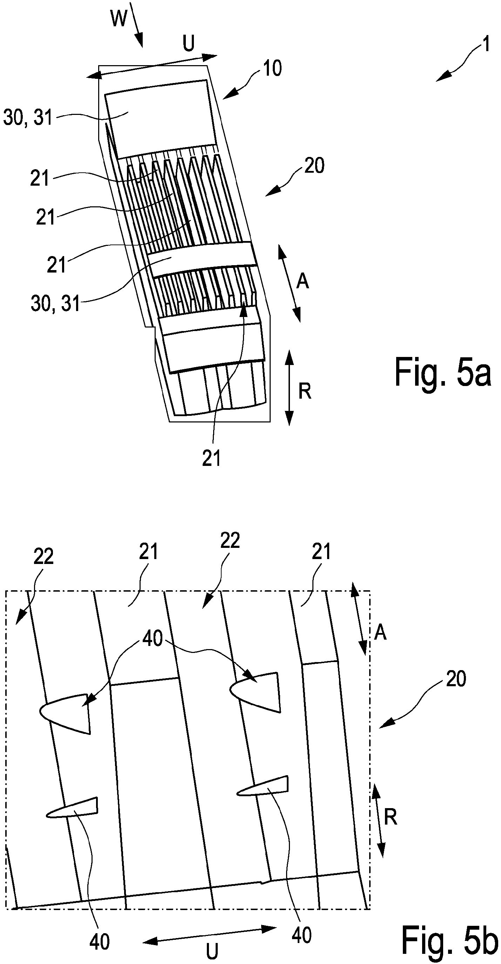

Die Figuren 5a und 5b zeigen eine schematische, dreidimensionale Schnittansicht und Detailansicht einer weiteren bevorzugten Ausführungsform eines Generators 1. Hierbei ist vorgesehen, dass der Kühlflächenabschnitt 20 zur Kühlung des Generators 1 Kühlrippen 21 aufweist. Es ist zu erkennen, dass die Kühlrippen eine Haupterstreckungsrichtung in Axialrichtung A aufweisen und in Umfangsrichtung benachbarte Kühlrippen 21 beabstandet zueinander angeordnet sind, so dass diese einen Spalt 22 zur Kühlung des Generators 1 ausbilden. Es ist zu erkennen, dass an den Kühlrippen 21 Vortexgeneratoren 40 angeordnet sind, die sich in den Spalt 22 zwischen benachbart angeordneten Kühlrippen 21 in Umfangrichtung U hinein erstrecken. Eine derartige Anordnung der Vortexgeneratoren 40 bewirkt eine Verwirbelung des Winds W, welches die Wärmeabfuhr und somit die Kühlung des Generators 1 verbessert. Diese Kühlwirkung wird in dieser bevorzugten Ausführungsform in besonderer Weise durch die in Radialrichtung R zweireihige Anordnung der Vortexgeneratoren 40 erzielt.

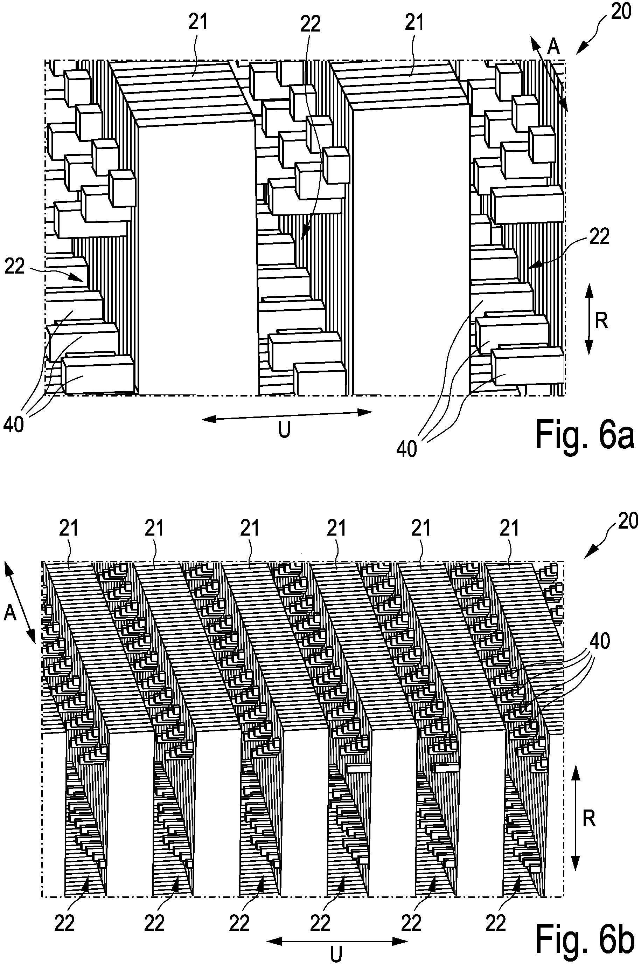

Die Figuren 6a und 6b zeigen schematische, dreidimensionale Detailansichten von weiteren bevorzugten Anordnungen und Ausbildungen von Vortexgeneratoren 40 an einem Generator 1 in einem Spalt 22, der durch in Umfangsrichtung U benachbart angeordnete Kühlrippen 21 ausgebildet wird. Die Vortexgeneratoren werden in diesen beiden Ausführungsformen integral an den Blechen des Generatorblechpakets ausgebildet. Hierbei ist zu erkennen, dass bei der in Figur 7a gezeigten Ausführungsform die Vortexgeneratoren 40 rechteckförmig ausgebildet sind. Bei dieser Ausführungsform ist vorgesehen, dass die Vortexgeneratoren in Radialrichtung vierreihig angeordnet sind, wobei die Größe der Vortexgeneratoren in Abhängigkeit der Reihe variiert. Ferner ist bei dieser Ausführungsform vorgesehen, dass die Vortexgeneratoren 40 der einzelnen Reihen in Axialrichtung A versetzt zueinander angeordnet sind. Die in Figur 6b dargestellte Ausführungsform umfasst eine in Radialrichtung R zweireihige Anordnung von Vortexgeneratoren 40, wobei die Vortexgeneratoren 40 der innenliegenden Reihe rechteckförmig ausgebildet sind und die Vortexgeneratoren 40 der außenliegenden Reihe dreieckförmig ausgebildet sind.

### Bezuqszeichenliste

- 1: Generator
- 2: Außenumfangsflächenabschnitt
- 10: Anströmflächenabschnitt
- 20: Kühlflächenabschnitt
- 21: Kühlrippen
- 22: Spalt
- 30: Luftleiteinheit
- 31: Luftleitelement
- 40: Vortexgeneratoren
- 100: Windenergieanlage
- A: Axialrichtung
- R: Radialrichtung
- U: Umfangsrichtung
- W: Wind

## Patentansprüche

1. Generator (1) für eine Windenergieanlage (100) zur Erzeugung elektrischer Energie aus kinetischer Energie, der Generator (1) umfassend einen Außenumfangsflächenabschnitt (2), der Außenumfangsflächenabschnitt (2) aufweisend:
- einen Anströmflächenabschnitt (10), den im Einbauzustand des Generators (1) Wind (W) in Anströmrichtung anströmt, wobei sich der Anströmflächenabschnitt (10) entlang einer Axialrichtung (A) und orthogonal dazu entlang einer Umfangsrichtung (U) erstreckt, und
- einen Kühlflächenabschnitt (20), der zur Kühlung des Generators (1) ausgebildet ist und im Einbauzustand in Anströmrichtung nachgelagert zu dem Anströmflächenabschnitt (10) angeordnet ist, wobei sich der Kühlflächenabschnitt (20) entlang einer Axialrichtung (A) und orthogonal dazu entlang einer Umfangsrichtung (U) erstreckt,
**dadurch gekennzeichnet, dass**
- in einem Bereich des Außenumfangsflächenabschnitts (2), insbesondere in einem Bereich des Anströmflächenabschnitts (10) und/oder in einem Bereich des Kühlflächenabschnitts (20), ein oder mehrere Vortexgeneratoren (40) zur passiven Kühlung des Generators (1) angeordnet sind.

2. Generator (1) nach dem vorhergehenden Anspruch 1, wobei
- auf dem Anströmflächenabschnitt (10) und/oder auf dem Kühlflächenabschnitt (20) ein oder mehrere Vortexgeneratoren (40) zur passiven Kühlung des Generators (1) angeordnet sind.

3. Generator (1) nach einem der vorhergehenden Ansprüche 1 oder 2, wobei
- der Kühlflächenabschnitt (20) gegenüber dem Anströmflächenabschnitt (10) in einer Radialrichtung (R) versetzt, insbesondere nach innen versetzt, angeordnet ist oder
- der Kühlflächenabschnitt (20) und der Anströmflächenabschnitt (10) in einer Radialrichtung (R) nicht versetzt zueinander angeordnet sind.

4. Generator (1) nach einem der vorhergehenden Ansprüche 1 bis 3, aufweisend eine Luftleiteinheit (30), die im Bereich des Anströmflächenabschnitts (10) und/oder im Bereich des Kühlflächenabschnitts (20) angeordnet ist, wobei die Luftleiteinheit (30) ausgebildet ist, den Wind (W) in Richtung des Kühlflächenabschnitts (20), insbesondere in einer Radialrichtung nach Innen in Richtung des Kühlflächenabschnitts (20), umzulenken.

5. Generator (1) nach dem vorhergehenden Anspruch 4, wobei der eine oder die mehreren Vortexgeneratoren (40) an der Luftleiteinheit (30) angeordnet sind.

6. Generator (1) nach einem der vorhergehenden Ansprüche 4 oder 5, wobei der eine oder die mehreren Vortexgeneratoren (40) in Anströmrichtung vor der Luftleiteinheit (30) angeordnet sind.

7. Generator (1) nach einem der vorhergehenden Ansprüche 4 bis 6, wobei der eine oder die mehreren Vortexgeneratoren (40) in Anströmrichtung hinter der Luftleiteinheit (30) angeordnet sind.

8. Generator (1) nach einem der vorhergehenden Ansprüche 4 bis 7, wobei die Luftleiteinheit (30) im Bereich eines Übergangs von dem Anströmflächenabschnitt (10) und dem Kühlflächenabschnitt (20) angeordnet ist.

9. Generator (1) nach einem der vorhergehenden Ansprüche 4 bis 8, wobei
- die Luftleiteinheit (30) eine Haupterstreckungsrichtung in Umfangsrichtung (U) aufweist, und/oder
- die Luftleiteinheit (30) mindestens ein Leitelement aufweist, wobei vorzugsweise
o das mindestens eine Leitelement einen Umlenkabschnitt aufweist, der ausgebildet ist, den Wind (W) in Richtung des Kühlflächenabschnitts (20) zur Luftkühlung des Generators (1) umzulenken, und/oder wobei vorzugsweise der Umlenkabschnitt durch ein gekrümmtes und/oder geknicktes Leitelement ausgebildet ist, und/oder
o mehrere Leitelemente in Radialrichtung (R) und/oder in Axialrichtung (A) versetzt zueinander angeordnet sind.

10. Generator (1) nach einem der vorhergehenden Ansprüche 1 bis 9, wobei die Vortexgeneratoren (40) in Axialrichtung (A) und/oder in Umfangsrichtung (U) beabstandet zueinander angeordnet sind.

11. Generator (1) nach einem der vorhergehenden Ansprüche 1 bis 10, wobei die Vortexgeneratoren (40) gleichmäßig verteilt auf dem Anströmflächenabschnitt (10) und/oder dem Kühlflächenabschnitt (20) angeordnet sind.

12. Windenergieanlage (100) aufweisend einen Generator (1) nach einem der vorhergehenden Ansprüche 1 bis 11.

13. Verwendung mehrerer Vortexgeneratoren (40) zur Anordnung in einem Bereich eines Außenumfangsflächenabschnitts (2), insbesondere zur Anordnung in einem Bereich eines Anströmflächenabschnitts (10) und/oder in einem Bereich eines Kühlflächenabschnitts (20), besonders bevorzugt zur Anordnung an einem Anströmflächenabschnitt (10) und/oder an einem Kühlflächenabschnitt (20) und/oder einer Luftleiteinheit (30), eines Generators (1) für eine Windenergieanlage (100).
